# EUROPEAN PATENT APPLICATION

(11) **EP 4 461 895 A1**
(43) Date of publication of application: **13.11.2024**
(21) Application number: 23199009.4
(22) Date of filing: 22.09.2023
(51) Int. Cl.: E03F 9/00, B08B 9/045

(54) **ROTATING DEVICES FOR FLEXIBLE SHAFT AND METHOD FOR TRANSMITTING MOTIVE POWER IN THE INTERNAL CLEANING OR WORKING OF PIPES**

(30) Priority: 09.05.2023 FI 20235520
(71) Applicant: Sukitustukku Oy, 01150 Siipo, Söderkulla (FI)
(72) Inventor: Josefsson, Jan, 01900 Nurmijärvi (FI); Lokkinen, Juho, 01150 Söderkulla (FI)
(74) Representative: Genip Oy

(57) **Abstract**

A rotating device (1) for a flexible shaft - especially a pipe cleaning or working device - comprises:
- a reel (90) rotatable in the rotating device;
- a wire cable (3) wound around the reel (90), which wire cable (3) has protective sheathing (2);
- means for fastening a first end of the wire cable (3) to a power transmission (70) drive shaft (172);
- the power transmission (70) comprises a rotating shaft (4) rotatable by means of a motor (50) and is configured to convert the rotary motion of the rotating shaft (4) into the rotary motion of the drive shaft (172), whereby the drive shaft (172) rotates the wire cable (3) inside the protective sheathing (2), whereby the free end of the wire cable (3), which free end extends outside the protective sheathing (2), also rotates;
- in the power transmission (70), the rotating shaft (4) is arranged relative to the reel (90) in the direction of the shaft of the reel and the drive shaft (172) is arranged perpendicularly relative to the rotating shaft (4), so that power transmission between the rotating shaft (4) and drive shaft (172) is arranged by means of a belt pulley (22) that follows the rotating shaft (4), a belt pulley (25) that follows the drive shaft (172) and a turned-plane belt (23) installed between these.

## Description

### Field of invention

The invention is related to rotating devices for a flexible shaft, such as pipe cleaning devices and devices intended for the internal working of pipes as well as to a method for transmitting motive power in the internal cleaning or working of pipes.

### Technical background

Rotating devices for a flexible shaft are used, for example, in the internal cleaning and working of pipes.

Pipe cleaning devices for a flexible shaft are used for the internal cleaning of pipes, especially sewers and ventilation pipes. Pipe cleaning devices for a flexible shaft are also used in the manufacture of cured-in-place pipes, such as sewer pipes, water pipes, gas pipes, chemical pipes and district heating pipes as well as in the internal renovation, service and maintenance of pipes and ducts.

A rotating device for a flexible shaft, such as devices used in the internal cleaning or working of pipes, comprises a wire cable with protective sheathing, which wire cable is typically wound on a reel in the pipe cleaning device. A tool used for the internal cleaning of a pipe is fastened to the free end of the wire cable. The tool is usually one of the following: unblocking tip, cup drill chuck, grinding body, mechanically rotatable cutting device, pipe cleaner, ring pipe cleaner, unblocking pipe cleaner, pipe cleaner for plastic pipes, brush (especially coating brush or pipe cleaning brush), or other tool intended for the internal working of a pipe and rotated inside a pipe. The other end of the wire cable, which is fastened to the rotating device for a flexible shaft, is rotated by means of a motor, which accomplishes the rotation of the wire cable and hence rotates the free end of the wire cable and the tool used in it.

By means of the rotating device for a flexible shaft, a necessary amount of the wire cable can be unwound from the reel and slipped, together with the rotatable tool fastened to the free end of the wire cable, into a pipe to be cleaned or worked. Moreover, the wire cable can be rotated by means of the motor, and after use the wire cable can be wound back to the reel.

The motor used is usually an electric motor integrated into the rotating device for a flexible shaft or an external motor, most commonly a cordless screwdriver, cordless drill or electric drill. In this case, the challenge is converting the rotating motion of the motor into the rotary motion of the wire cable, and that the wire cable reel has to be rotatable.

Known rotating devices for a flexible shaft include, as an example, RIGDID FlexShaft^{®} pipe cleaning drums (see for example https://www.ridgid.eu/de/de/flexshaft). FlexShaft^{®} is a trademark registered by Rigdid, Inc. in the United States. Models K9-102 and K9-204 employ wire cable fastening where the rotary motion produced by a screwdriver used as an external motor is converted into a rotary motion of the wire cable by means of angle transmission.

Another way to implement rotating devices for a flexible shaft include, for example, the arrangement used in Picote Oy's some devices, where the rotating motor of the wire cable is placed inside the wire cable reel, in which case the rotating motor rotates with the wire cable reel. Such device is, for example, "Picote Micro/Mini/Midi/Maxi Miller", see for example Umwelttechnik Hoffman GmbH's website http://www.umwelttechnik-hoffmann.de/produktdetails/kategorie/fraestechnik/artikel/picote-miller-range.html.

### Objective of invention

The objective of the invention is to simplify the structure of a rotating device for a flexible shaft. This objective can be accomplished by means of the rotating device for a flexible shaft according to independent claim 1 and by means of the method according to independent claim 23 for transmitting motive power in the internal cleaning or working of a pipe.

The dependent claims describe preferred aspects for the rotating device for a flexible shaft and for the method for transmitting motive power in the internal cleaning or working of a pipe.

Parallel independent claim 25 describes a preferred way of executing the wire cable fastening of the rotating device for a flexible shaft. Dependent claims 26 and 27 dependent on this describe a versatile wire cable fastening for fastening wire cables of various sizes in a reliable manner.

Other parallel independent claim 28 describes a preferred way of executing the suspension of the reel and rotating shaft of the rotating device for a flexible shaft. Dependent claim 29 dependent on this describes a stabler execution of the rotating shaft, which, especially when using belt drive, can prevent the slipping of the belt.

In order to make the scope of the patent application more equitable, we reserve the right to specify the target of claims 25 - 27 and 28 - 29 by the characteristics presented in claims 1 - 22. It is possible to execute the rotating devices for a flexible shaft according to claims 25 - 27 and 28 - 29 so that they also contain as optional parts or technical solutions one or more of the characteristics presented in claims 1 - 22.

### Advantages of invention

The rotating device for a flexible shaft comprises a) a reel rotatable in the rotating device, b) a wire cable wound around the reel, which wire cable has protective sheathing, and c) means for fastening a first end of the wire cable to a power transmission drive shaft.

The power transmission comprises a rotating shaft rotatable by means of a motor and is configured to convert the rotary motion of the rotating shaft into the rotary motion of the drive shaft, whereby the drive shaft rotates the wire cable inside the protective sheathing, whereby the free end of the wire cable, which free end extends outside the protective sheathing, also rotates. In the power transmission, the rotating shaft is arranged relative to the reel in the direction of the shaft of the reel and the drive shaft is arranged perpendicularly relative to the rotating shaft, so that power transmission between the rotating shaft and drive shaft is arranged by means of a belt pulley that follows the rotating shaft, a belt pulley that follows the drive shaft and a turned-plane belt installed between these. Plane turning means that at one point the belt travels along the outer edge of the belt pulley that follows the rotating shaft and at another point along the outer edge of the belt pulley that follows the drive shaft, which outer edges are not at the same plane relative to each other, whereby the plane of travel of the belt has to be turned along the travel of the belt.

Such rotating device for a flexible shaft can be executed in a simpler manner than known rotating devices for a flexible shaft, which devices use angle transmission. On the other hand, such rotating device for a flexible shaft can be made in a smaller size than a rotating device where the motor is located inside the reel. Due to the belt drive, it is possible to easily transmit a greater torque with the rotating device for a flexible shaft than with known machines employing angle transmission, the accomplishment of which greater torque by means of angle transmission would require the use of large and heavy parts that are expensive to machine. This is a disadvantage especially when the rotating device for a flexible shaft is a so-called portable or movable machine.

The reel can have a shaft sleeve, which is anchored in a stationary manner to the side plate of the rotating device and through which the rotating shaft extends. In this case, the rotating shaft can be rotated inside the shaft sleeve, whereby the rotation of the rotating shaft can be separated from the rotating of the reel.

A bearing can be arranged around the shaft sleeve so that the reel is rotatable on the bearing. This can facilitate the rotating of the reel.

According to a preferred aspect, the rotating shaft extends outwards from the side plate or is arranged in such recess or opening in the side plate that the rotating shaft can be fastened to the chuck or power take-off of the machine used as an external motor, such as drill or screwdriver. This makes it easier for the external motor to stay in place and makes it simpler to use a drill or screwdriver as an external motor. The rotating shaft can consist of one or more parts. When the rotating shaft consists of several parts, the part connected to the external motor (drill or screwdriver) can be changeable. In this case, after a damage to the rotating shaft, for example if the rotating shaft has slipped in the chuck of the drill or screwdriver, the damaged part of the rotating shaft can be changed advantageously. This also enables the use of different types of fastening profiles for connecting an external motor.

The shaft sleeve is most advantageously arranged in the middle of the reel so that when the reel is rotated, the rotating shaft does not move. This facilitates the use of an external motor, such as drill or screwdriver, because in this case it is sufficient that the user keeps the external motor in place.

The plane turning of the belt can be carried out by means of a number (at least one, most advantageously at least two) of inclined guide rollers so that these guide the belt so that its travel path runs from the outer circumference of the belt pulley that follows the rotating shaft of the belt to the outer circumference of the belt pulley that follows the drive shaft and back. The guide rollers, which are most preferably mounted on a bearing, can simplify the technical execution of the guiding of the belt. They help to prevent the jumping off of the plane-turned belt from the belt pulleys and hence improve the operational reliability of the rotating device for a flexible shaft.

The inclination of the guide rollers is most advantageously arranged in different directions relative to each other. This is so because the plane-turned belt must travel in opposite directions when moving from the first plane of rotation to the second plane of rotation and when moving from the second plane of rotation to the first plane of rotation. The purpose of the guide rollers is to stabilise the movement of the belt and to prevent the slipping off of the belt from the belt pulley.

The inclinations can be carried out in a stationary manner by means of surfaces and/or fastenings made in a bracket. This reduces the need for adjustment afterwards.

The rotating device most advantageously comprises a bearing mounting plate, which serves as a protective casing to protect the belt pulley that follows the drive shaft. This can prevent equipment damage that would be caused by contamination or exposure to chemicals.

The mounting plate most advantageously has a hole between the belt pulley that follows the drive shaft and a number of inclined guide rollers, through which hole the belt is arranged to travel. This also accomplishes partial protection for the belt used in belt drive.

The rotating device for a flexible shaft can further comprise rotation locking, such as an index pin, which is arranged in its first position to prevent the rotation of the reel and in its second position to release the rotation of the reel, in which case in the first position of rotation locking, the position of the belt pulley that follows the drive shaft relative to the reel remains in place. This can facilitate the insertion of the wire cable into place.

The rotating device for a flexible shaft can comprise a number of pins mounted on bearings for guiding the wire cable. This can relieve the unwinding of the wire cable from the reel or its winding on the reel. On the other hand, the pins can make the device casing sturdier.

The pins mounted on bearings can be fastened between the side walls of the device casing, in which case the reel is rotatable relative to the pins mounted on bearings.

The belt is most advantageously a cogged belt or V-belt. The use of a cogged belt makes it possible for the belt to work with just little tensioning. On the other hand, the use of a V-belt enables the transmission of a very great torque.

According to one aspect, the belt can form a target break point in power transmission between the motor used in the rotating device and the free end of the wire cable extending outside the protective sheathing. The use of the belt as a "fuse" makes it possible, on one hand, to prevent the breaking of the wire cable when, for example, a tool fastened to the wire cable gets stuck. It might be difficult to remove a broken wire cable from the pipeline that is being treated.

On the other hand, by limiting the rotating force it is possible to reduce damage inflicted on the pipeline that is being treated.

The drive shaft can comprise longitudinal wire cable fastening, where a wire cable is pushed into the drive shaft most advantageously from the end of the drive shaft into a longitudinal bore made in its centre most advantageously in the direction of thickness of the drive shaft, and locked with retainer screws.

The longitudinal wire cable fastening can comprise a number (most advantageously two or three) consecutive concentric bores of different sizes, so that the bore with the biggest diameter is at the end of the drive shaft and the diameter of each bore is smaller than the previous bore in the bores made deeper in the drive shaft, whereby a wire cable corresponding to the diameter of the bore can be fastened at each bore. In practice, the diameter of the wire cable is approximately 0.5 mm smaller than the diameter of the bore.

In this case, there is most preferably a number of retainer screws at each bore. We have used four retainer screws per each wire cable fastening, but another number (1, 2, 3, 4,...) may also work. The retainer screws are most advantageously machined to an angle of 0 and 120 degrees relative to each other in relation to the drive shaft.

With this type of arrangement, it is possible to use wire cables of different thicknesses in the rotating device for a flexible shaft, and, if necessary, the replacement of the wire cable can be done easily without the replacement of other parts.

The rotating shaft is most advantageously mounted on bearings on both sides of the belt to be rigid. This prevents bending of the rotating shaft caused by the pull caused by the belt, and slipping of the belt resulting from the bending.

The rotating device for a flexible shaft is most advantageously a pipe cleaning device or a device intended for the internal working of a pipe. In this case, a tool used for the internal cleaning of a pipe or a tool intended for the internal working of a pipe and rotated inside the pipe is most advantageously fastened to the free end of the wire cable extending outside the protective sheathing. The tool can be, for example, one of the following: unblocking tip, cup drill chuck, grinding body, cutting disc, mechanically rotatable cutting device, brush (especially coating brush or cleaning brush), pipe cleaner, ring pipe cleaner, unblocking pipe cleaner, pipe cleaner for plastic pipes, or other tool intended for the internal cleaning of a pipe and rotated inside a pipe.

The method for transmitting motive power in the internal cleaning or working of pipes employs a tool used for the internal cleaning of a pipe or a tool intended for the internal working of a pipe and rotated inside a pipe by means of a rotating device for a flexible shaft (which rotating device is most advantageously a rotating device for a flexible shaft according to a second aspect of the invention), which comprises:
- a reel rotatable in the rotating device;
- a wire cable wound around the reel, which wire cable has protective sheathing;
- means for fastening a first end of the wire cable to a power transmission drive shaft;
- which power transmission comprises a rotating shaft rotatable by means of a motor and is configured to convert the rotary motion of the rotating shaft into the rotary motion of the drive shaft, whereby the drive shaft rotates the wire cable inside the protective sheathing, whereby the free end of the wire cable, which free end extends outside the protective sheathing, also rotates;
- in which power transmission the rotating shaft is arranged relative to the reel in the direction of the shaft of the reel and the drive shaft is arranged perpendicularly relative to the rotating shaft, so that power transmission between the rotating shaft and drive shaft is arranged by means of a belt pulley that follows the rotating shaft, a belt pulley that follows the drive shaft and a belt bent between these.

In the method, the use of angle transmission can be avoided by the use of belt drive. With the help of this, especially in an abrasive operating environment - such as in environments with sand-containing or metal-containing grinding waste possibly mixed with liquid, as is typically the case in pipe renovations - damage caused to angle transmission by the abrasive material can be prevented. The possibly necessary replacement of the belt is much cheaper than the replacement of angle transmission. On the other hand, due to the belt drive, it is also possible to use relatively greater torques than what would reasonably be attainable with angle transmission within the economic framework and within the mass and size possible for the rotating device. This enables new application possibilities for the rotating device for a flexible shaft.

According to a preferred aspect, the strength of the belt is adapted to the power transmission so that the belt forms a target break point in power transmission between the motor used in the rotating device and the free end of the wire cable extending outside the protective sheathing. In this way, it is possible to accomplish a device failure in an overloading situation to an easily replaceable inexpensive part. In particular, this can prevent the breakage of the pipes being cleaned or treated internally and/or the breaking of the wire cable inside the pipeline being treated.

A rotating device for a flexible shaft according to a parallel aspect, especially a pipe cleaning or working device, comprises: a) a reel rotatable in the rotating device, b) a wire cable with protective sheathing wound around the reel, c) power transmission comprising a rotating shaft rotatable by a motor and configured to convert the rotary motion of the rotating shaft into the rotary motion of the drive shaft, whereby the drive shaft rotates the wire cable inside the protective sheathing, whereby the free end of the wire cable extending outside the protective sheathing also rotates. The drive shaft comprises longitudinal wire cable fastening integrated into the drive shaft, where a wire cable is pushed into the drive shaft from the end of the drive shaft into a longitudinal bore made in its centre most advantageously in the direction of thickness of the drive shaft, and locked with a number of retainer screws that press the wire cable from the side. In comparison with the above-mentioned models FlexShaft^{®} K9-102 and K9-204, with the help of the arrangement we have invented, it is possible to omit the separate cable coupling used in them, which enables a simplified structure of the rotating device for a flexible shaft. At the same time, the solution prevents disturbance caused by the possible loss of the separate cable coupling when replacing the wire cable. The solution also works with such rotating devices for a flexible shaft where the power transmission is implemented in a way different from the one presented in this patent application.

When the longitudinal wire cable fastening comprises a number - most advantageously two or three - consecutive concentric bores of different sizes, so that the bore with the biggest diameter is at the end of the drive shaft and the diameter of each bore is smaller than the previous bore in the bores made deeper in the drive shaft, whereby a wire cable corresponding to the diameter of the bore can be fastened at each bore, it is possible to achieve a possibility comparable to the models FlexShaft^{®} K9-102 and K9-204 to use wire cables of different thicknesses; however, without the need to replace the cable couplings used in the rotating device for a flexible shaft. This is a valuable feature in practical installation circumstances, because separate detachable cable couplings can easily go missing or be misplaced during the replacement of the cable wire. Instead, the longitudinal cable fastening integrated in the drive shaft and allowing the use of wire cables of many sizes cannot go missing or be misplaced.

A number of retainer screws can be machined at each bore of different diameters.

By using the retainer screw fastening described above, it is possible to arrange the fastening of wire cables of different thicknesses on the same drive shaft in a more reliable manner than in an arrangement where retainer screws only located at the largest bore would be used. This is so because a smaller wire cable could move in a bore that is sufficiently much larger (more than 0.5 mm) than the wire cable itself. If executed in this manner, the wire cable fastening might be unreliable, and also the fastening of the protective sheathing would be difficult to execute due to the off-centre fastening of the wire cable.

According to a parallel aspect, the rotating device for a flexible shaft (especially a pipe cleaning or working device) comprises: a) a reel rotatable in the rotating device, b) a wire cable with protective sheathing wound around the reel, and power transmission comprising a rotating shaft rotatable by a motor and configured to convert the rotary motion of the rotating shaft into the rotary motion of the drive shaft, whereby the drive shaft rotates the wire cable inside the protective sheathing, whereby the free end of the wire cable extending outside the protective sheathing also rotates.

The reel and rotating shaft are suspended by means of separate bearings to the body of the rotating device, whereby the reel and rotating shaft are rotatable independently of each other, for example, in the same or opposite direction and at different speeds of rotation. This diversifies and facilitates the operation of the rotating device.

The separate bearings can be arranged as a number of bearing bushings and as a number of bearings, through which number of bearing bushings the rotating shaft extends, and by means of which number of bearing bushings and number of bearings the rotating shaft is made rigid at both of its ends. In this way, it is possible to prevent the deflection of the rotating shaft, and the operational reliability of the device can be enhanced. The deflection of the rotating shaft can become a problem when, for example, using a belt drive, where it causes occasional slipping of the belt.

### List of drawings

The rotating device for a flexible shaft and the method for transmitting motive power in the internal cleaning of pipes is described in more detail in the below drawings by using the rotating device for a flexible shaft presented in FIG 1 - 9 as an example of an embodiment. Of the drawings:
- FIG 1: shows a pipe cleaning device viewed diagonally from above;
- FIG 2: shows the pipe cleaning device shown in FIG 1 viewed from a side;
- FIG 3: shows the pipe cleaning device shown in FIG 1;
- FIG 4: shows the pipe cleaning device shown in FIG 1, to which an external motor is connected as a source of rotating power;
- FIG 5 and 6: show the power transmission arrangement of the pipe cleaning device shown in FIG 1;
- FIG 7 and 8: show details of the power transmission arrangement shown in FIG 5 and 6; and
- FIG 9: show a section that discloses the bearing arrangement of the reel and rotating shaft.

The same reference numbers refer to the same structural parts in all drawings.

### Detailed description of the invention

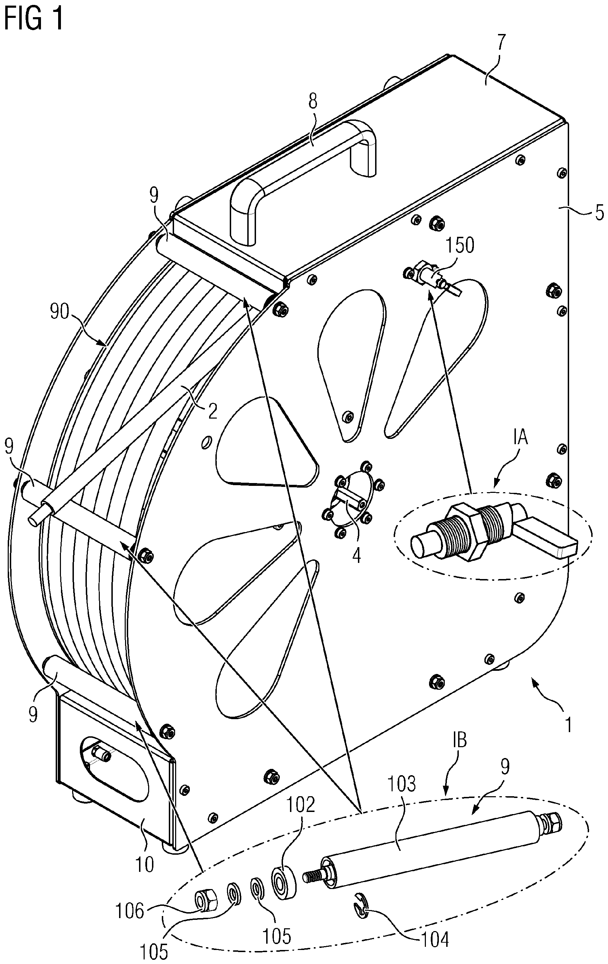

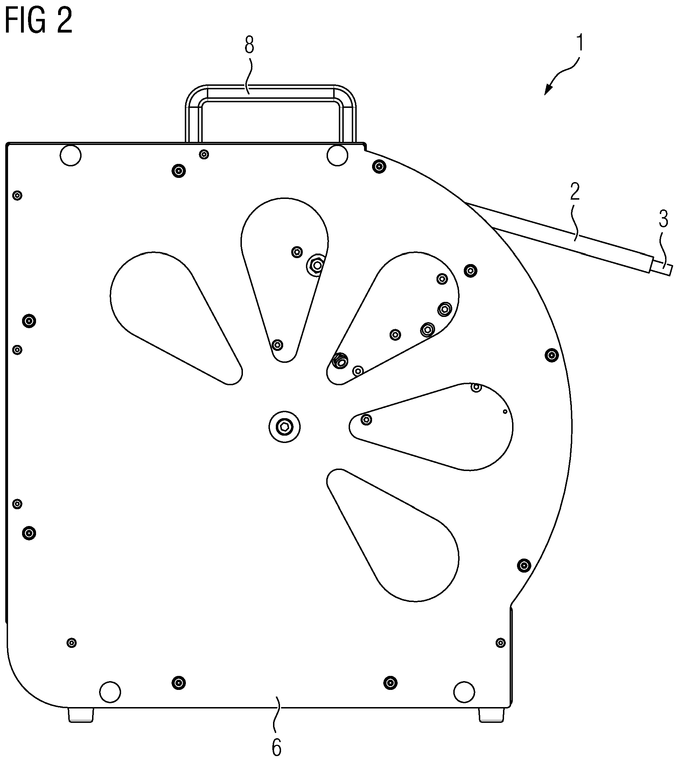

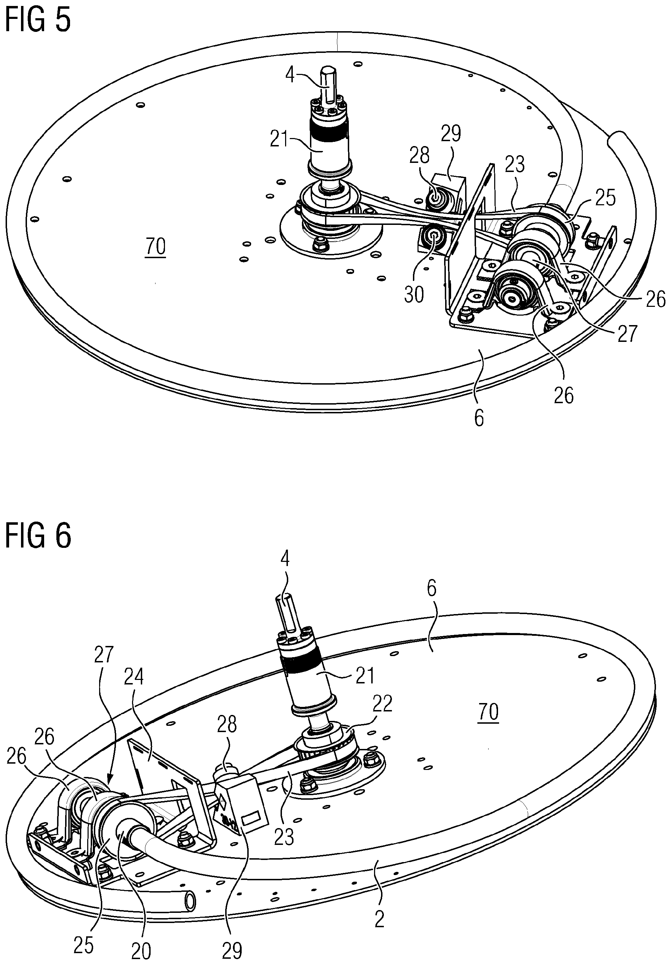

FIG 1 and 2 show rotating device 1 for a flexible shaft. Rotating device 1 comprises reel 90 arranged inside a device casing (of which FIG 1-4 show side plates 5, 6, cover 7, front plate 10) and arranged to be rotatable, with wire cable 3 wound on reel 90. With the exception of its ends, wire cable 3 is inside protective sheathing 2. The free end of wire cable 3, which free end extends outside protective sheathing 2, is shown in FIG 1 and 2. The device can be carried by handle 8. Rotating device 1 comprises power transmission 70, which converts the rotating motion of rotating shaft 4 into the rotary motion of wire cable 3. The method of execution of the power transmission is presented in more detail in FIG 5 and 6.

Detail IA shows rotation locking, which in the example embodiment is carried out by means of index pin 150. The rotation locking is arranged in its first position to prevent the rotation of reel 90 and in its second position to release the rotation of reel 90.

Detail IB shows the structure of pins 9 mounted on bearings, where one end of pin 9 is shown as an exploded view. The opposite end is shown in the assembled configuration. Pins 9 serve as roller pins, which relieve the pulling out and pulling in of wire cable 3 and protective sheathing 2 and on one hand also guide wire 3 and protective sheathing 2, and on the other hand make the device casing more rigid.

Pin 9 has roller shaft 101, which comes at both of its ends through a hole in side plate 5, 6. Between shaft 101 and roller tube 103, there is bearing 102, which enables the light rotation of roller tube 103 relative to roller shaft 101. Shaft 102 is fastened by its both ends to side plate 5, 6 by means of lock ring 104, washer 104 placed on both sides of side wall 5, 6, and locking nut 106.

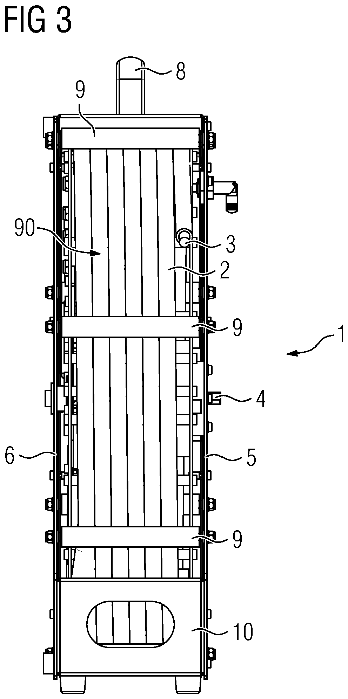

FIG 3 shows the same rotating device viewed from the front.

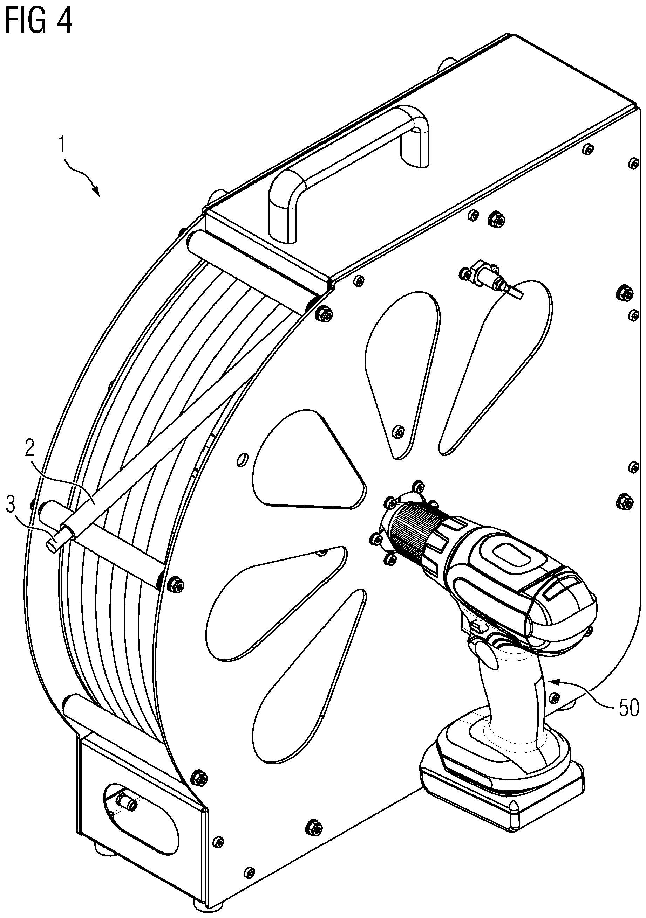

In the operating situation according to FIG 4, external motor 50 (such as a cordless or electric screwdriver or drill) is ready to rotate rotating shaft 4, whereby wire cable 3 rotates inside protective sheathing 2 transmitted by power transmission 70.

FIG 5, 6 and 9 show power transmission 70 in more detail. There is lead-in/bearing bushing 21 mounted on bearings around rotating shaft 4. Rotating shaft 4 is fastened (most advantageously in a form-restricted manner but a friction joint is also possible) to belt pulley 22, whereby belt pulley 22 follows the rotary motion of rotating shaft 4.

One end of wire cable 3 is fastened to the end 20 of drive shaft 172. As an example, a 10 mm wire cable is fastened to the end 20 of drive shaft 172 by means of retainer screws 173. The fastening of an 8 mm wire cable is deeper inside drive shaft 172, and its retainer screws 174 are between bearing brackets 26. The actual fastening of protective sheathing 2 has been removed in FIG 5 and 6 because of illustrative clarity, because it would prevent a view of the structure of belt drive. Belt pulley 25 is most advantageously fastened in a form-restricted manner (coding 175) to drive shaft 172. In this case, drive shaft 172 follows the rotary motion of belt pulley 25.

There are consecutive bores in drive shaft 172 for the fastening of wire cable 3. For a 10 mm wire cable, there is a bore of 10.5 mm at the end of drive shaft 172. A 10 mm wire cable is fastened by pushing it into the bore in question and by tightening retainer screws 173 into place. For an 8 mm wire cable, there is a bore of 8.5 mm after the 10.5 mm bore in the drive shaft. A bore smaller than this is most preferably concentric with the bore of 10.5 mm. Both bores are best in the middle of the longitudinal cross-section of drive shaft 172, in other words in a rotationally symmetrical manner, so that the wire cable does not sway when the drive shaft is rotating. An 8 mm wire cable is fastened in a corresponding manner as a 10 mm wire cable, in other words by pushing the wire cable into the bore in question and by tightening retainer screws 174 into place.

Several consecutive cable wire fastenings can be executed in the same manner. As an example, it would be possible to make a bore of 12.5 mm for a 12 mm wire cable, after which there would be a longer bore of 10.5 mm for a 10 mm wire cable and finally a longer yet bore of 8.5 mm for an 8 mm wire cable. By using retainer screws tightened in threads made at the bore in question for each wire cable size, the wire cable used can always be fastened so tightly that the rotary motion of drive shaft 172 transmits into the axial rotary motion of wire cable 3 (in other words, so that wire cable 3 starts to rotate inside protective sheathing 2).

There is plane-turned belt 23 between belt pulleys 22, 25. Belt 23 runs via guide rollers 28, 30. Guide rollers 28, 30 are most advantageously installed on a guide roller bracket.

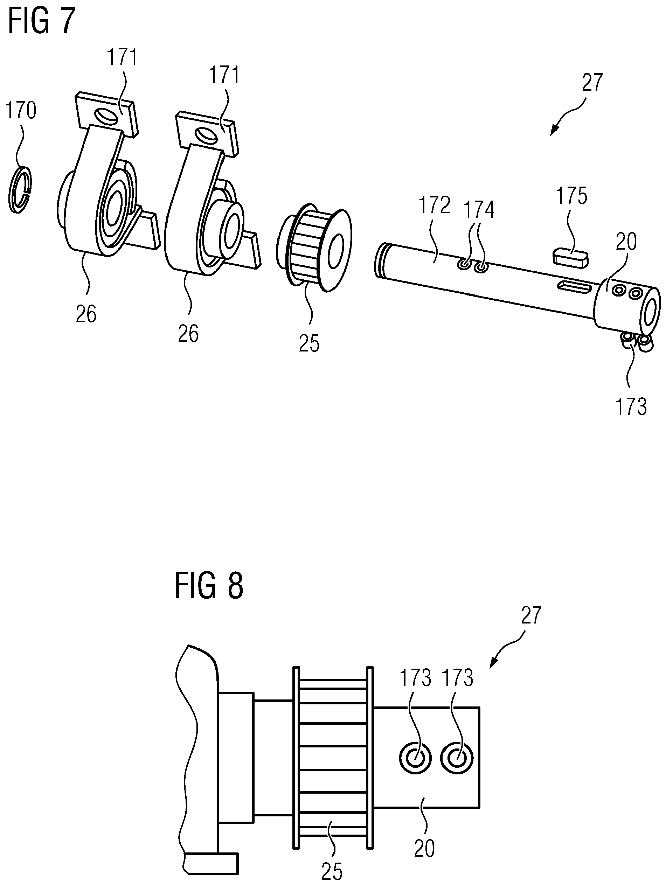

The more detailed structure of drive system 27 is presented more precisely in FIG 7 and 8.

Rotating device 1 for a flexible shaft, especially pipe cleaning or working device 1, comprises:
- reel 90 rotatable in the rotating device;
- wire cable 3 wound around reel 90, which wire cable 3 has protective sheathing 2; and
- means for fastening a first end of wire cable 3 to power transmission 70 drive shaft 172.

Power transmission 70 comprises rotating shaft 4 rotatable by means of motor 50 and is configured to convert the rotary motion of rotating shaft 4 into the rotary motion of drive shaft 172, whereby drive shaft 172 rotates wire cable 3 inside protective sheathing 2, whereby the free end of wire cable 3, which free end extends outside protective sheathing 2, also rotates.

In power transmission 70, rotating shaft 4 is arranged relative to reel 90 in the direction of the shaft of the reel and drive shaft 172 is arranged perpendicularly relative to rotating shaft 4, so that power transmission between rotating shaft 4 and drive shaft 172 is arranged by means of belt pulley 22 that follows rotating shaft 4, belt pulley 25 that follows drive shaft 172 and turned-plane belt 23 installed between these.

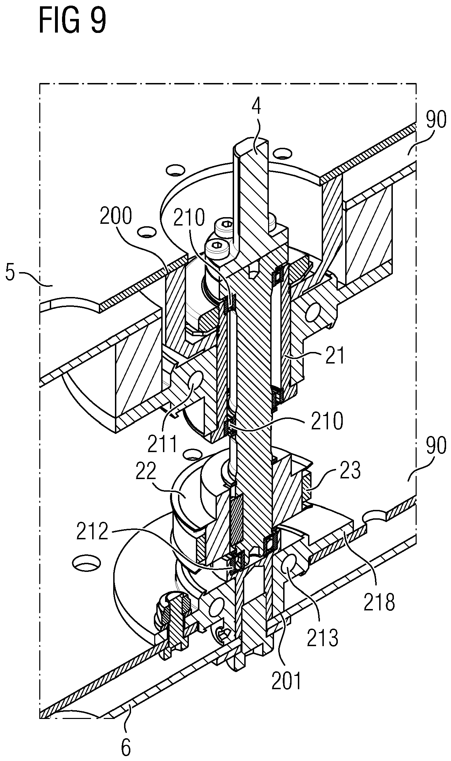

FIG 9 shows bearings of reel 90 and on the other hand also bearings of rotating shaft 4.

Shaft sleeve 21 (cf. also FIG 5 and 6) is fastened to side plate 5 of rotating device 1 and also to reel 90 by means of bearing 211. Fastening surface 200 shown in FIG 9 is for fastening to side plate 5.

Belt pulley 22 is installed around rotating shaft 4, most advantageously in a form-restricted manner or in a friction-restricted manner.

Bearing 218 is fastened from the outer circumference (from the flange of bearing 218) to reel 90 and from the inner hole of bearing 218 to fastening surface 201, which is further fastened to side plate 6. Fastening surface 201 shown in FIG 9 is for fastening to side plate 6 of bearing 218, in addition to which fastening surface 201 also serves as the bearing housing of bearing 212. Bearing 218 is also fastened to reel 90.

Rotating shaft 4 is mounted on bearings by means of bearings 210 and 212. The motion of rotating shaft 4 hence rotates belt pulley 22 and the balls of bearings 210, 212, but not reel 90.

Due to the suspension carried out by means of bearings 213, 211, reel 90 is rotatable relative to the device casing. Moreover, the rotation of reel 90 does not rotate rotating shaft 4.

Rotating shaft 4 can be rotated in a different direction or in the same direction as reel 90, and reel 90 and rotating shaft 40 can also be rotated in different directions.

Shaft 4 most advantageously runs via the centre axis of reel 90. Rotating shaft 4 extends through shaft sleeve 21.

By means of the arrangement described above, rotating shaft 4 is hence mounted on bearing by means of bearing 212 relative to its axis of rotation also from its side plate 6 side end. When rotating axis 4 is mounted on bearings at both of its ends to be rigid, the turning or deflection of rotating shaft 4 towards drive shaft 172 can be prevented, which would otherwise take easily place because of the pull caused by belt 23.

Rotating shaft 4 extends outwards from side plate 5 or is arranged in such recess or opening in side plate 5 that rotating shaft 4 can be fastened to the chuck or power take-off of the machine used as external motor 50, such as drill or screwdriver.

Shaft sleeve 21 is arranged in the centre of reel 90 so that when reel 90 is rotated, rotating shaft 4 does not move. In other words, rotating shaft 4 is most advantageously installed in the centre of reel 90.

The plane turning of belt 23 is carried out by means of a number of inclined guide rollers 28, 30 so that these guide belt 23 so that its travel path runs from the outer circumference of belt pulley 22 that follows rotating shaft 4 to the outer circumference of belt pulley 25 that follows drive shaft 20 and back.

Inclination is explained as follows: If we think that rotating shaft 4 is at an angle of 0 and drive shaft 172 is at an angle of 90, bracket 29 of the deflection rollers positions the pair of deflection rollers between these, in other words at an angle of 45 degrees. Since belt 23 has to move from the outer circumference of a belt pulley to the outer circumference of a second belt pulley, deflection rollers 28, 30 must be inclined to be parallel with the belt. This angle depends on the diameter of belt pulleys 22, 25 and on the distance between rotating shaft 4 and drive shaft 172. In the prototypes manufactured at the time when this is being written, this angle is +12 degrees for deflection roller and -12 degrees for deflection roller 30. If the structure of the rotating device is changed, these angles change. In the first prototypes, the belt pulleys were smaller and the roller angles were +8 and -8 degrees.

The inclination of guide rollers 28, 30 is arranged in different directions relative to each other.

The inclinations are carried out in a stationary manner by means of surfaces and/or fastenings made in bracket 29.

Rotating device 1 comprises bearing mounting plate 24, which serves as a protective casing to protect belt pulley 25 that follows drive shaft 172.

Mounting plate 24 has a hole between belt pulley 25 that follows drive shaft 172 and a number of inclined guide rollers 28, 30, through which hole belt 23 is arranged to travel.

Rotation locking, such as index pin 150, is arranged in its first position to prevent the rotation of reel 90 and in its second position to release the rotation of reel 90. In the first position of rotation locking, the position of belt pulley 25 that follows drive shaft 172 relative to reel 90 remains in place.

Rotating device 1 comprises a number of pins 9 mounted on bearings for guiding wire cable 3. Pins 9 mounted on bearings are fastened between side walls 5, 6 of the device casing, whereby reel 90 is rotatable relative to pins 9 mounted on bearings.

Belt 23 is a cogged belt or V-belt.

Belt 23 can form a target break point in power transmission 70 between the motor used in the rotating device and the free end of wire cable 3 extending outside protective sheathing 2.

Rotating device 1 can be a pipe cleaning device or a device intended for the internal working of a pipe.

A tool used for the internal cleaning of a pipe or a tool intended for the internal working of a pipe and rotated inside the pipe can be fastened to the free end of wire cable 3 extending outside protective sheathing 2. The tool is one of the following: unblocking tip, cup drill chuck, grinding body, cutting disc, mechanically rotatable cutting device, brush (especially coating brush or cleaning brush), pipe cleaner, ring pipe cleaner, unblocking pipe cleaner, pipe cleaner for plastic pipes, or other tool intended for the internal working of a pipe and rotated inside a pipe.

The method for transmitting motive power in the internal cleaning or working of pipes employs a tool used for the internal cleaning of a pipe or a tool intended for the internal working of a pipe and rotated inside a pipe by means of a rotating device for a flexible shaft (which rotating device is most advantageously a rotating device for a flexible shaft according to a second aspect of the invention), which method comprises:
- reel 90 rotatable in the rotating device;
- wire cable 3 wound around reel 90, which wire cable 3 has protective sheathing 2; and
- means for fastening a first end of wire cable 3 to power transmission 70 drive shaft 172.

Power transmission 70 comprises rotating shaft 4 rotatable by means of motor 50 and is configured to convert the rotary motion of rotating shaft 4 into the rotary motion of drive shaft 172, whereby drive shaft 172 rotates wire cable 3 inside protective sheathing 2, whereby the free end of wire cable 3, which free end extends outside protective sheathing 2, also rotates.

In power transmission 70, rotating shaft 4 is arranged relative to reel 90 in the direction of the shaft of the reel and drive shaft 172 is arranged perpendicularly relative to rotating shaft 4, so that power transmission between rotating shaft 4 and drive shaft 172 is arranged by means of belt pulley 22 that follows rotating shaft 4, belt pulley 25 that follows drive 172 shaft and turned-plane belt 23 installed between these.

The strength of belt 23 can be adapted to power transmission 70 so that belt 23 forms a target break point in power transmission 70 between the motor used in the rotating device and the free end of wire cable 3 extending outside protective sheathing 2.

The invention should not be understood to be limited only by the below claims, but the invention is to be understood to include all their legal equivalents and the combinations of the embodiments presented.

### List of reference numbers used:

- 1: rotating device for flexible shaft, especially pipe cleaning or working device
- 2: protective sheathing
- 3: free end of wire cable
- 4: rotating shaft
- 5: side plate
- 6: side plate
- 7: cover
- 8: handle
- 9: pin
- 10: front plate
- 20: end of drive shaft
- 21: lead-in/bearing bushing of rotating shaft
- 22: belt pulley
- 23: belt
- 24: bearing mounting plate
- 25: belt pulley
- 26: bearing bracket
- 27: drive system
- 28: guide roller
- 29: guide roller bracket
- 30: guide roller
- 50: external motor, such as cordless or electric screwdriver or drill
- 70: power transmission
- 90: reel
- 101: roller shaft
- 102: bearing
- 103: roller tube
- 104: lock ring
- 105: washer
- 106: locking nut
- 150: index pin
- 151: handle
- 170: lock ring
- 171: mounting lug
- 172: drive shaft
- 173: retainer screws for 10 mm wire cable
- 174: retainer screws for 8 mm wire cable
- 175: coding
- 200: fastening surface
- 201: fastening surface
- 210: bearing
- 211: bearing
- 212: bearing
- 213: bearing
- 218: bearing

## Claims

1. A rotating device for a flexible shaft, especially a pipe cleaning or working device (1), which **comprises:**
- a reel (90) rotatable in the rotating device;
- a wire cable (3) wound around the reel (90), which wire cable (3) has protective sheathing (2);
- means for fastening a first end of the wire cable (3) to power transmission (70) drive shaft (172);
- the power transmission (70) comprises a rotating shaft (4) rotatable by means of a motor (50) and is configured to convert the rotary motion of the rotating shaft (4) into the rotary motion of the drive shaft (172), whereby the drive shaft (172) rotates the wire cable (3) inside the protective sheathing (2), whereby the free end of the wire cable (3), which free end extends outside the protective sheathing (2), also rotates;
- in the power transmission (70), the rotating shaft (4) is arranged relative to the reel (90) in the direction of the shaft of the reel and the drive shaft (172) is arranged perpendicularly relative to the rotating shaft (4), so that power transmission between the rotating shaft (4) and drive shaft (172) is arranged by means of a belt pulley (22) that follows the rotating shaft (4), a belt pulley (25) that follows the drive shaft (172) and a turned-plane belt (23) installed between these.

2. The rotating device for a flexible shaft according to claim 1, **where:** the reel (90) has a shaft sleeve (21), which is anchored in a stationary manner to a side plate (5) of the rotating device and through which the rotating shaft (4) extends.

3. The rotating device for a flexible shaft according to claim 2, **where:** a bearing is arranged around the shaft sleeve (21) so that the reel (90) is rotatable on the bearing.

4. The rotating device for a flexible shaft according to claim 2 or 3, **where:** the rotating shaft (4) extends outwards from the side plate (5) or is arranged in such recess or opening in the side plate (5) that the rotating shaft (5) can be fastened to the chuck or power take-off of the machine used as an external motor (50), such as drill or screwdriver.

5. The rotating device for a flexible shaft according to any one of the claims 2-4, **where:** a shaft sleeve is arranged in the middle of the reel (90) so that when the reel (90) is rotated, the rotating shaft (4) does not move.

6. The rotating device for a flexible shaft according to any one of the preceding claims, **where:** the plane turning of the belt (23) is carried out by means of a number of inclined guide rollers (28, 30) so that these guide the belt (23) so that its travel path runs from the outer circumference of the belt pulley (22) that follows the rotating shaft (4) to the outer circumference of the belt pulley (25) that follows the drive shaft (172) and back.

7. The rotating device for a flexible shaft according to any one of the preceding claims, **where:** the inclination of the guide rollers (28, 30) is arranged in different directions relative to each other.

8. The rotating device according to claim 7, **where:** the inclinations are carried out in a stationary manner by means of surfaces and/or fastenings made in a bracket (29).

9. The rotating device for a flexible shaft according to any one of the preceding claims, **where:** the rotating device comprises a bearing mounting plate (24), which serves as a protective casing to protect the belt pulley (25) that follows the drive shaft (172).

10. The rotating device according to claim 9, **where:** the mounting plate (24) has a hole between the belt pulley (25) that follows the drive shaft and a number of inclined guide rollers (28, 30), through which hole the belt (23) is arranged to travel.

11. The rotating device for a flexible shaft according to any one of the preceding claims, **which comprises:** rotation locking, such as an index pin (150), which is arranged in its first position to prevent the rotation of the reel (90) and in its second position to release the rotation of the reel (90), whereby in the first position of rotation locking, the position of the belt pulley (25) that follows the drive shaft (172) relative to the reel (90) remains in place.

12. The rotating device for a flexible shaft according to any one of the preceding claims, **which comprises:** a number of pins (9) mounted on bearings for guiding the wire cable (3).

13. The rotating device according to claim 12, **where:** the pins (9) mounted on bearings are fastened between the side walls (5, 6) of the device casing, whereby the reel (90) is rotatable relative to the pins (9) mounted on bearings.

14. The rotating device for a flexible shaft according to any one of the preceding claims, **where:** the belt (23) is a cogged belt or V-belt.

15. The rotating device for a flexible shaft according to any one of the preceding claims, **where:** the belt (23) forms a target break point in power transmission (70) between the motor used in the rotating device and the free end of the wire cable (3) extending outside the protective sheathing (2).

16. The rotating device for a flexible shaft according to any one of the preceding claims, **where:** the drive shaft (172) comprises longitudinal wire cable fastening, where the wire cable (3) is pushed into the drive shaft (172) from its end into a longitudinal bore made in its centre most advantageously in the direction of thickness of the drive shaft (172), and locked with a number of retainer screws (173, 174).

17. The rotating device for a flexible shaft according to claim 16, **where:** the longitudinal wire cable fastening comprises a number - most advantageously two or three - consecutive concentric bores of different sizes, so that the bore with the biggest diameter is at the end (20) of the drive shaft (173) and the diameter of each bore is smaller than the previous bore in the bores made deeper in the drive shaft (173), whereby a wire cable (2) corresponding to the diameter of the bore can be fastened at each bore.

18. The rotating device for a flexible shaft according to claim 17, **where:** at each bore, there is a number of retainer screws (173, 174) that most advantageously press into the wire cable (3) from the side for fastening the wire cable (3).

19. The rotating device for a flexible shaft according to any one of the preceding claims, **where:** the rotating shaft (4) is mounted on bearings on both sides of the belt (23) to be rigid.

20. The rotating device for a flexible shaft according to any one of the preceding claims, **which is:** a pipe cleaning device (1) or a device intended for the internal working of a pipe.

21. The rotating device for a flexible shaft according to claim 20, where a tool used for the internal cleaning of a pipe or a tool intended for the internal working of a pipe and rotated inside the pipe is fastened to the free end of the wire cable (3) extending outside the protective sheathing (2).

22. The rotating device according to claim 21, **where the tool is one of the following:** unblocking tip, cup drill chuck, grinding body, cutting disc, mechanically rotatable cutting device, brush, such as coating brush or cleaning brush, pipe cleaner, ring pipe cleaner, unblocking pipe cleaner, pipe cleaner for plastic pipes, or other tool intended for the internal working of a pipe and rotated inside a pipe.

23. A method for transmitting motive power in the internal cleaning or working of pipes, **characterised in that:**
- the method employs a tool used for the internal cleaning of a pipe or a tool intended for the internal working of a pipe and rotated inside a pipe by means of a rotating device for a flexible shaft - which rotating device is most advantageously a rotating device for a flexible shaft according to any one of the preceding claims 1-22 - which method comprises:
- a reel (90) rotatable in the rotating device;
- a wire cable (3) wound around the reel (90), which wire cable (3) has protective sheathing (2);
- means for fastening a first end of the wire cable (3) to a power transmission (70) drive shaft (172);
- the power transmission (70) comprises a rotating shaft (4) rotatable by means of a motor (50) and is configured to convert the rotary motion of the rotating shaft (4) into the rotary motion of the drive shaft (172), whereby the drive shaft (172) rotates the wire cable (3) inside the protective sheathing (2), whereby the free end of the wire cable (3), which free end extends outside the protective sheathing (2), also rotates;
- in the power transmission (70), the rotating shaft (4) is arranged relative to the reel (90) in the direction of the shaft of the reel and the drive shaft (172) is arranged perpendicularly relative to the rotating shaft (4), so that power transmission between the rotating shaft (4) and drive shaft (172) is arranged by means of a belt pulley (22) that follows the rotating shaft (4), a belt pulley (25) that follows the drive shaft (172) and a turned-plane belt (23) installed between these.

24. The method according to claim 23, **where:** the strength of the belt (23) is adapted to the power transmission (70) so that the belt (23) forms a target break point in the power transmission (70) between the motor used in the rotating device and the free end of the wire cable (3) extending outside the protective sheathing (2).

25. A rotating device for a flexible shaft, especially a pipe cleaning or working device (1), which **comprises:**
- a reel (90) rotatable in the rotating device;
- a wire cable (3) wound around the reel (90), which wire cable (3) has protective sheathing (2);
- power transmission (70), which comprises a rotating shaft (4) rotatable by means of a motor (50) and is configured to convert the rotary motion of the rotating shaft (4) into the rotary motion of the drive shaft (172), whereby the drive shaft (172) rotates the wire cable (3) inside the protective sheathing (2), whereby the free end of the wire cable (3), which free end extends outside the protective sheathing (2), also rotates;
and where the drive shaft (172) comprises longitudinal wire cable fastening integrated into the drive shaft, where the wire cable (3) is pushed into the drive shaft (172) from the end of the drive shaft into a longitudinal bore made in its centre most advantageously in the direction of thickness of the drive shaft (172), and locked with a number of retainer screws (173, 174) that press the wire cable (3) from the side.

26. The rotating device for a flexible shaft according to claim 25, **where:** the longitudinal wire cable fastening comprises a number - most advantageously two or three - consecutive concentric bores of different sizes, so that the bore with the biggest diameter is at the end (20) of the drive shaft (173) and the diameter of each bore is smaller than the previous bore in the bores made deeper in the drive shaft (173), whereby a wire cable (2) corresponding to the diameter of the bore can be fastened at each bore.

27. The rotating device for a flexible shaft according to claim 26, **where:** a number of retainer screws are machined at each bore which has a diameter of different sizes.

28. A rotating device for a flexible shaft, especially a pipe cleaning or working device (1), which **comprises:**
- a reel (90) rotatable in the rotating device;
- a wire cable (3) wound around the reel (90), which wire cable (3) has protective sheathing (2);
- power transmission (70), which comprises a rotating shaft (4) rotatable by means of a motor (50) and is configured to convert the rotary motion of the rotating shaft (4) into the rotary motion of a drive shaft (172), whereby the drive shaft (172) rotates the wire cable (3) inside the protective sheathing (2), whereby the free end of the wire cable (3), which free end extends outside the protective sheathing (2), also rotates;
and where the reel (90) and rotating shaft (4) are suspended by means of separate bearings (210, 211, 212, 213) to a body (5, 6) of the rotating device, whereby the reel (90) and rotating shaft (4) are rotatable independently of each other, for example, in the same or opposite direction and at different speeds of rotation.

29. The rotating device for a flexible shaft according to claim 28, **where:** the separate bearings (210, 211, 212, 213) are arranged as a number of bearing bushings (21) and as a number of bearings (21B), through which number of bearing bushings (21) the rotating shaft (4) extends, and by means of which number of bearing bushings (21) and number of bearings (21B) the rotating shaft (4) is made rigid at both of its ends.
